# EUROPÄISCHE PATENTSCHRIFT

(11) **EP 3 475 587 B1**
(45) Veröffentlichungstag und Bekanntmachung des Hinweises auf die Patenterteilung: **22.04.2020**
(21) Anmeldenummer: 17761190.2
(22) Anmeldetag: 23.06.2017
(51) Int. Cl.: F16B 19/10

(54) **VERSCHLUSSELEMENT ZUM VERSCHLIESSEN UND ABDICHTEN INNENDRUCKBEANSPRUCHTER BOHRUNGEN**
CLOSURE ELEMENT FOR CLOSING AND SEALING BORES THAT ARE SUBJECT TO INTERNAL PRESSURE
ÉLÉMENT DE FERMETURE PERMETTANT DE FERMER ET DE RENDRE ÉTANCHES DES ALÉSAGES SOUMIS À UNE PRESSION INTERNE

(30) Priorität: 23.06.2016 DE 102016211282
(43) Veröffentlichungstag der Anmeldung: 01.05.2019
(73) Patentinhaber: Baier & Michels GmbH & Co. KG, 64372 Ober-Ramstadt (DE)
(72) Erfinder: LENDLE, Michael, 65201 Wiesbaden (DE); KRAUS, Eugen, 69198 Schriesheim (DE)
(74) Vertreter: Sommer, Peter
(86) Internationale Anmeldenummer: PCT/EP2017/065483
(87) Internationale Veröffentlichungsnummer: WO 2017/220758

(56) Entgegenhaltungen:
- WO-A1-2016/074384
- GB-A- 1 294 067
- GB-A- 2 125 507
- US-A- 3 411 398
- US-A- 3 493 254

## Beschreibung

### Gegenstand der Erfindung

Die Erfindung betrifft eine Blindnietmutter zum Verschließen und Abdichten innendruckbeanspruchter Bohrungen.

### Stand der Technik

Ein selbststopfender Blindniet mit geschlossenem Ende zum Verbinden zweier Werkstücke und zum Abdichten einer für diese Verbindung verwendeten Öffnung in den beiden Werkstücken ist aus der EP 0 536 957 B1, in deutscher Übersetzung veröffentlicht als DE 692 10 162 T2 bekannt. Beim Verformen eines zusammenfaltbaren Abschnitts eines Schaftes des Blindniets durch Ausbeulen und Falten erfolgt ein Füllen der Öffnung in dem Werkstück. Der Stielkopf des Blindniets reißt an einer Sollbruchstelle ab und verbleibt im gesetzten Niet. Nachteilig ist hierbei, dass kein Gewinde breitgestellt werden kann.

Aus der EP 0 305 868 ist ein Blindniet mit einem Verformungsabschnitt und einem Gewindeabschnitt mit Innengewinde bekannt, bei dem die Wandstärke des Verformungsabschnitts ausgehend vom Gewindeabschnitt konisch verringert ist. Dadurch kann der Blindniet bei unterschiedlich dicken Bauteilen eingesetzt werden. Nachteilig ist hierbei, dass keine Abdichtung erfolgt.

Aus der EP 0 494 747 A1 ist ein Blindniet mit einem Verformungsabschnitt und einem Gewindeabschnitt mit Innengewinde bekannt, bei dem die Wandstärke des Gewindeabschnitts gegenüber der Wandstärke des Verformungsabschnitts deutlich größer ist, um eine Verformung des Gewindes beim Setzen des Niets zu verhindern. Nachteilig ist hierbei, dass keine Abdichtung erfolgt.

Aus der GB 2 125 507 A ist ein Niet bekannt, der einen Gewindeabschnitt und einen Verformungsbereich und eine Sollbruchstelle aufweist.

Aus der DE 36 23 123 ist bekannt, einen Blindniet mit einem an einer Stange befindlichen Stopfen vorzusehen, der mit einem konischen Abschnitt in einen zylindrischen Schaft des Blindniets eindringt und radial expandiert. Nachteilig ist hierbei, dass das Bauteil mehrteilig ist und dass kein Gewinde breitgestellt werden kann.

Die Aufgabe der Erfindung besteht darin, einen Blindniet bereitzustellen, der bei geringer Bauteilanzahl sowohl ein Gewinde aufweist als auch eine Abdichtung ermöglicht.

### Darstellung der Erfindung

Eine erfindungsgemäße Blindnietmutter zum Einbringen in eine Öffnung eines oder mehrerer Bauteile weist einen hohlen Schaft mit einem vorderen Ende zum Ansetzen eines Montagewerkzeugs und mit einem hinteren Ende zum Einbringen in und/oder Durchführen durch die Öffnung auf. Der Schaft weist einen Verformungsabschnitt mit einer ersten Wandstärke t1 und einen daran anschließenden Gewindeabschnitt mit einer zweiten Wandstärke t2 größer als die erste Wandstärke t1 auf und der Gewindeabschnitt ist mit einem Innengewinde versehen. Der Schaft weist im Bereich des Gewindeabschnitts und/oder des Verformungsabschnitts eine Sollbruchstelle auf, die bezüglich ihrer Lage und ihrer Ausrichtung so ausgebildet ist, dass beim Spannen des Schafts in axialer Richtung nach dem Bruch an der Sollbruchstelle ein Eintauchen des Gewindeabschnitts in den Verformungsabschnitt erfolgt. Der Verformungsabschnitt ist als Dichtkörper ausgebildet und weist radiale Rollen auf.

Bei dieser Blindnietmutter besteht der Schaft aus einem zylindrischer Grundkörper mit einem Verformungsabschnitt und einem damit einstückig verbundenen Gewindeabschnitt, welcher als Spreizkörper wirkt. Durch eine plastische Verformung des Verformungsbereichs nach radial außen beim Zusammenschieben und Eintauchen des als Spreizkörper wirkenden Gewindeabschnitts wird ein radialer Druck auf die Innenwand der Bohrung oder Öffnung ausgeübt, wodurch die Bohrung oder Öffnung abgedichtet ist. Damit wirkt die Blindnietmutter nach Art eines Verschlusselements. Dieses Verschlusselement kann aus verschiedenen Werkstoffen bestehen und in unterschiedlichen Durchmessern ausgeführt werden.

Der Verformungsabschnitt der Blindnietmutter weist radiale Rillen auf, die dazu dienen, das verdrängte Material aufzunehmen. Da Toleranzen beim Fertigungsprozess der Blindnietmutter entstehen, aber natürlich auch die abzudichten Bohrung Fertigungstoleranzen aufweist, dienen die radialen Rillen dazu, beim Verformen Material aufnehmen, das durch Passungenauigkeiten entsteht. Falls die Bohrung zu eng sein sollte, baut der Gewindeabschnitt als Spreizkörper im Verformungsabschnitt als Dichtkörper einen solch hohen Druck auf, dass der Verformungsvorgang nicht komplett beendet werden kann. Die Rillen können etwas Druck abbauen, indem sie sich verformen und Material aufnehmen. Wenn man sich die Rillen nach dem kompletten Verformungsprozess anschaut, sind diese wieder flach und mit Material gefüllt.

Ebenfalls kann das Verschlusselement zu Reparaturzwecken eingesetzt werden. Versehentlich falsch gebohrte Löcher können abgedichtet und gleichzeitig für eine kleinere Schraube genutzt werden.

Bei der Montage der Blindnietmutter entsteht, im Vergleich zur Montage eines Blindniets, kein Abfallprodukt.

Die Eigenschaften der Erfindung können auch genutzt werden um ein Gewinde in vorhandenen größeren Bohrungen zu erzeugen.

Dabei kann beispielsweise ein Dübelsystem mit einem beliebigen Gewinde, wie beispielsweise einem metrischen Gewinde oder einem Zollgewinde verwendet werden.

Dies ermöglicht, dass man sämtliche Bauteile beispielsweise mit einer herkömmlichen metrischen Schraube befestigen kann.

Ebenfalls umfasst diese Erfindung ein Werkzeug zur Demontage des Verschlusselementes ohne die Eigenschaften der vorhandenen Bohrung zu verletzen.

### Kurzbeschreibung der Zeichnung

Die Erfindung ist in der Zeichnung beschrieben. Es zeigt:
- Fig. 1: die Blindnietmutter vor der Montage im Schnitt AA aus Fig. 2;
- Fig. 2: die Blindnietmutter aus Fig. 1 in Draufsicht
- Fig. 3: ein Ausschnitt aus Fig. 1;
- Fig. 4A-C: verschiedene weitere Ausführungsmöglichkeiten in Detailansicht;
- Fig. 5A-G: den Ablauf der Montage;
- Fig. 6: den Ablauf der Demontage.

### Ausführungsbeispiele der Erfindung

Die vorliegende Erfindung umfasst eine Blindnietmutter zum dichtenden Verschließen von Bohrungen in unterschiedlichsten Einsatzbereichen. Diese Blindnietmutter eignet sich für unterschiedlichste Durchmesser- und Druckbeanspruchungen.

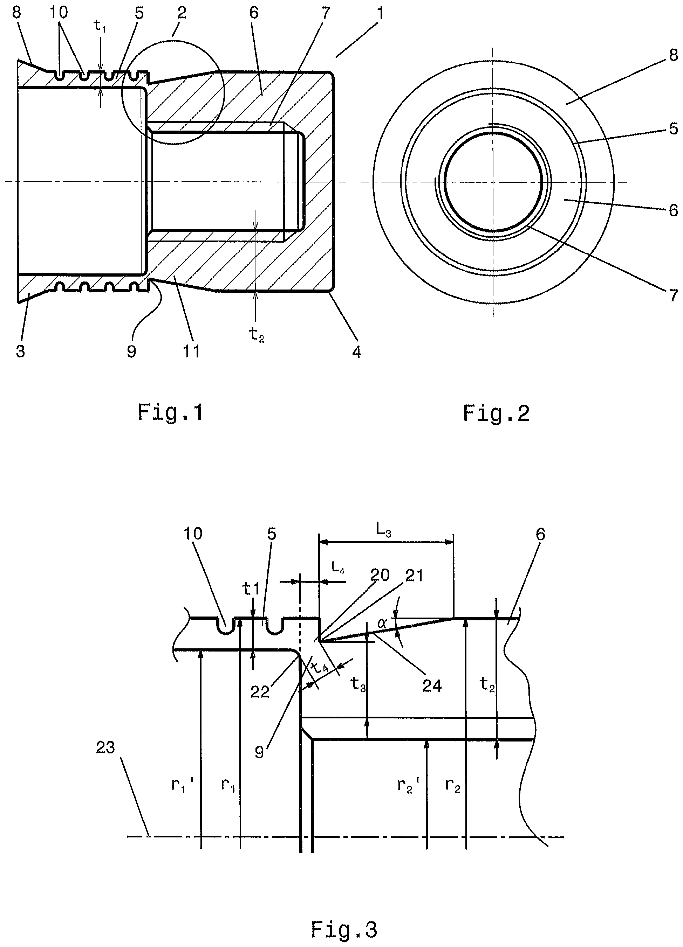

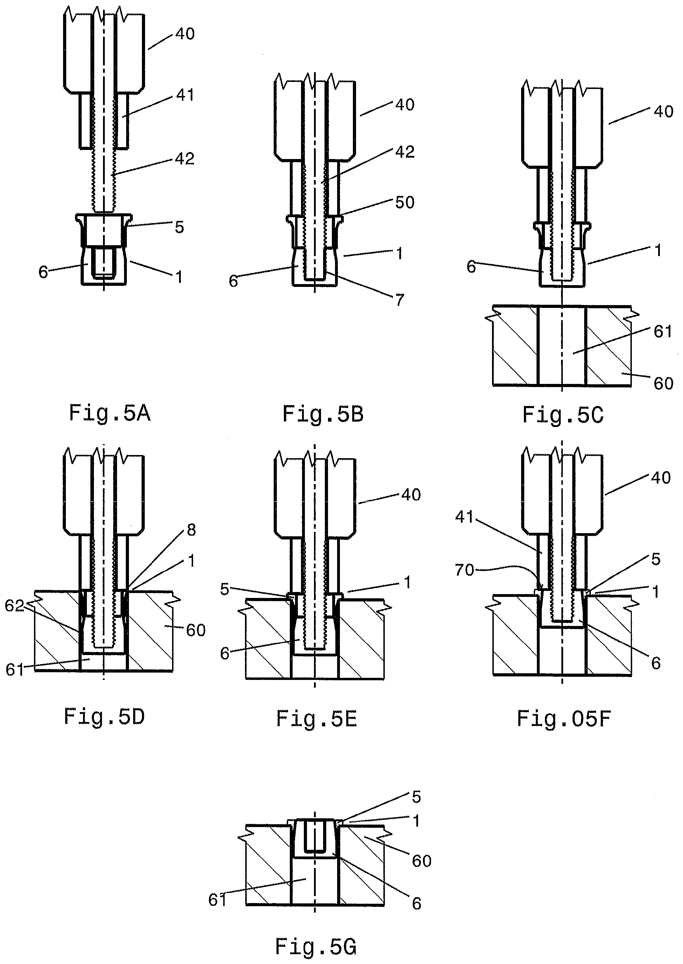

In Fig. 1 ist eine Blindnietmutter 1 zum Einbringen in eine Öffnung eines oder mehrerer Bauteile vor der Montage dargestellt aufweisend, wobei die Blindnietmutter 1 im vorliegenden Fall als ein Verschlusselement für eine Bohrung oder für eine Öffnung in einem Werkstück verwendet wird. Das Blindnietmutter 1 besteht aus einem hohlen Schaft 2, der aus einem Stück geformt ist. Die Blindnietmutter 1 weist dabei ein vorderes Ende 3 zum Ansetzen eines Montagewerkzeugs und ein hinteres Ende 4 zum Einbringen in und/oder Durchführen durch die Öffnung auf, wobei der Schaft 2 des vorderen Endes 3 einen Verformungsabschnitt 5 mit einer ersten Wandstärke t1 und einen daran anschließenden Gewindeabschnitt 6 mit einer zweiten Wandstärke t2 größer als die erste Wandstärke t1 aufweist, wobei der Gewindeabschnitt 6 mit einem Innengewinde 7 versehen ist. Die Blindnietmutter 1 kann verschiedene Kopfformen aufweisen, etwa, wie in Fig. 5A-G dargestellt, einen Flachkopf, aber auch einen Senkkopf mit einer am Kopf angeordneten, sich zum Ende des Kopfes hin aufgeweiteten Fase. Die Blindnietmutter 1 kann auch ohne einen Kopf ausgeführt sein, wie in Fig. 1 dargestellt.

Um das Verschlusselement in einer vorhandenen Bohrung, siehe Fig. 5c, richtig zu platzieren, befindet sich an dem vorderen Ende des Schafts eine sich nach außen verbreiternde Fase 8. Mit Hilfe dieser Fase 8 ist es möglich, das Verschlusselement 1 in der Bohrung zu zentrieren.

Da der Außendurchmesser der Blindnietmutter 1 kleiner sein muss, als das zu verschließende Loch, kann über eine Fase 8 die gleichmäßige Ausformung des Verformungsabschnittes gewährleistet werden. Die Fase 8 sorgt für das zentrierte Einführen. Mit dem Beginn des Setzprozesses wird ein Druck auf die Blindnietmutter 1 erzeugt und die Fase 8 gleichmäßig in die Bohrung gedrückt und dadurch zentriert sich das gesamte Element.

Teile der Fase 8 bzw. des Verformungsabschnittes 5 können nach dem Setzvorgang auch noch oberhalb der Bohrung überstehen. Bei einem Senkkopf kann auf eine Fase 8 verzichtet werden.

Zusätzlich kann die Fase 8 sich beim Umformprozess der Blindnietmutter 1 an die Geometrie der Bohrung anpassen und somit zusätzlich abdichten.

In das Innengewinde 7 wird ein Gewindedorn geschraubt, der an einem Montage- und Demontagewerkzeug vorhanden ist und später beschrieben ist.

Der Schaft 2 weist im Bereich des Gewindeabschnitts 6 und/oder des Verformungsabschnitts 5 eine Sollbruchstelle 9 auf, die bezüglich ihrer Lage und ihrer Ausrichtung so ausgebildet ist, dass beim Spannen des Schafts 2 in axialer Richtung nach dem Bruch an der Sollbruchstelle 9 ein Eintauchen des Gewindeabschnitts 6 in den Verformungsabschnitt 5 erfolgt.

Die Blindnietmutter 1 wird also während des Umformprozesses bei der Montage an der definierten Sollbruchstelle 9 getrennt und die getrennten Teile 5, 6 werden ineinander gezogen. An der Sollbruchstelle 9 wird also die Blindnietmutter 1 aufgetrennt und es entstehen der Funktion nach aus dem Gewindeabschnitt 6 ein Spreizkörper und aus dem Verformungsabschnitt 5 ein Dichtkörper. In diesem gesamten Vorgang wird ein Kraft-/ und Formschluss zwischen dem Gewindeabschnitt 6 und dem Verformungsabschnitt 5 erzeugt. Dieser Kraft-/ und Formschluss sorgt für den radialen Druck gegen die Innenwand der abzudichten Bohrung. Denn durch die radiale Kraft auf das Bauteil entsteht ein Kraftschluss. Beim Verformen passt sich der Verformungsabschnitt 5 an die Geometrie der abzudichten Bohrung an, so dass ein Formschluss entsteht.

Der Verformungsabschnitt 5 weist als Dichtkörper radiale Rillen 10 auf. Diese dienen dazu, das verdrängte Material aufzunehmen.

Am Gewindeabschnitt 6 ist eine Einführfase 11 vorgesehen.

In Fig. 2 ist die Blindnietmutter 1 aus Fig. 1 in der Draufsicht mit einer Schnittebene A dargestellt aufweisend den Verformungsabschnitt 5 mit der Fase 8 und den Gewindeabschnitt 6 mit dem Innengewinde 7.

In Fig. 3 ist ein Abschnitt der Blindnietmutter 1 aus Fig. 1 dargestellt, wobei der Gewindeabschnitt 6 dabei einen sich an den Verformungsabschnitt 5 anschließenden Verbindungsbereich 20 der Länge L4 mit der Sollbruchstelle 9 aufweist. Der Gewindeabschnitt 6 weist am Übergang zum Verbindungsbereich 20 eine dritte Wandstärke t3 auf. Hier ist auch zu erkennen, dass die minimale Wandstärke t4 der Sollbruchstelle 9 im Verbindungsbereich 20 kleiner als die erste Wandstärke t1 des Verformungsabschnitts 5 und kleiner als die dritte Wandstärke t3 am Übergang zum Verbindungsbereich 20 ist.

Die Wandstärke t4 der Sollbruchstelle 9 ist dabei die kürzeste Entfernung zwischen einer Außenfläche 21 und einer Innenfläche 22 der Blindnietmutter 1, wohingegen die anderen Wandstärken t1, t2 und t3 stets in Richtung zu einer Mittelachse 23 hin gemessen werden.

Die Blindnietmutter kann auch als Verschlusselement verwendet werden, um in einem Werkstück mit einer Öffnung oder Bohrung ein Gewinde in Form eines Dübels bereitzustellen. Das Gewinde kann dabei beispielsweise ein metrisches Gewinde sein. Auf diese Weise kann beispielsweise eine handelsübliche metrische Schraube verwendet werden, um an dem Werkstück weitere Bauteile zu befestigen.

Je nach Abmessung der erforderlichen Schraube wird erwartet, dass das Verschlusselement unterschiedliche Drehmomente übertragen kann. Für eine hohe Drehmomentaufnahme kann der Mantelfläche des Verformungsabschnitts 5 eine geometrische Besonderheit beigefügt werden.

Am Gewindeabschnitt 6 ist die Einführfase 11 vorgesehen, die dazu dient, nach dem Bruch der Blindnietmutter 1 den Gewindeabschnitt 6 als gebildeten Spreizkörper in vorbestimmter Weise in den Verformungsabschnitt 5 als Dichtkörper einzuführen. Der dazu festgelegte Weg wird über das Montagewerkzeug eingestellt, das später näher beschrieben ist.

Der Gewindeabschnitt 6 weist eine Verjüngung 24 auf, wobei der Gewindeabschnitt 6 an seinem Außenumfang in Richtung zum Verformungsabschnitt 5 hin über eine Länge L3 konisch verjüngt ist. Der Konuswinkel a der Verjüngung 24 am Gewindeabschnitt 6 beträgt im dargestellten Fall 15°.

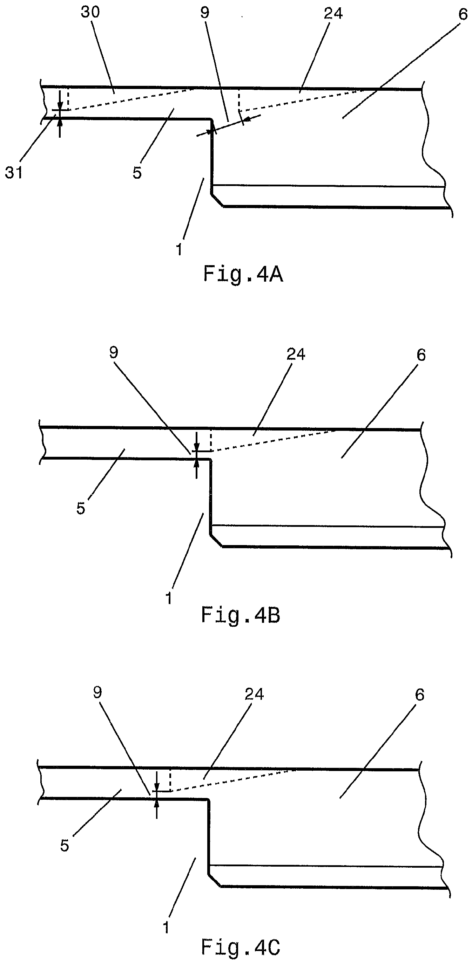

Fig. 4A-C zeigt verschiedene weitere Ausführungsmöglichkeiten der Blindnietmutter 1 in Detailansicht. In Fig. 4A weist die Blindnietmutter 1 eine erste Verjüngung 24 mit einer ersten Sollbruchstelle 9 am Gewindeabschnitt 6 und eine zweite Verjüngung 30 mit einer zweiten Sollbruchstelle 31 auf. Beim Ziehen des Gewindeabschnitts 6 mittels eines Montagewerkzeugs bricht die Blindnietmutter 1 also an der ersten Sollbruchstelle 9 und an der zweiten Sollbruchstelle 31. Dadurch wird die Verbindung durch Kraft- und Formschluss zwischen der gesetzten Blindnietmutter 1 und der abzudichten Bohrung verbessert.

In Fig. 4B weist die Blindnietmutter 1, wie in Fig. 1, nur eine Verjüngung 24 mit der ersten Sollbruchstelle 9 auf, wobei im Vergleich zu Fig. 1 die Sollbruchstelle 9 eine kürzere minimale Wandstärke t4 aufweist.

In Fig. 4C weist die Blindnietmutter 1 eine Verjüngung 24 mit einer Sollbruchstelle 9 auf, die im Verformungsabschnitt 5 angeordnet ist.

Fig. 5A zeigt die Blindnietmutter 1 aufweisend den Verformungsabschnitt 5 und den Gewindeabschnitt 6 vor der Verbindung mit einem Montagewerkzeug 40. Als Montagewerkzeug 40 wird ein Blindnietmutternsetzgerät mit Kraft-Weg-Einstellung verwendet. Für das Montagewerkzeug 40 wird zusätzlich ein spezielles Mundstück 41 und einen angepassten Gewindedorn 42 benötigt.

Fig. 5B zeigt das Einschrauben der Blindnietmutter 1 auf das Werkzeug 40 bis zum Erreichen eines Anschlags 50 am Werkzeug 40, wobei der Gewindedorn 42 in das Innengewinde 7 des Gewindeabschnitts 6 geschraubt wird.

Die genaue Anpassung des Mundstückes 41 und des Gewindedornes 42 ist von den Platzverhältnissen des Anwendungsfalls und von der Kopfgeometrie der Blindnietmutter 1 abhängig.

Fig. 5C zeigt, wie das Werkzeug 40 mit der Blindnietmutter 1 an ein Werkstück 60 gehalten wird, um die Blindnietmutter 1 in eine Öffnung oder Bohrung 61 im Werkstück 60 einzuführen. Das Werkstück 60 kann auch mehrlagig sein, wobei die Öffnungen der mehreren Lagen übereinanderliegen.

Fig. 5D zeigt das Einführen der Blindnietmutter 1 in die Bohrung 61, wobei zu erkennen ist, dass die Blindnietmutter 1 einen geringeren Durchmesser als die Bohrung 61 aufweist und somit ein Spalt 62 vorhanden ist. Die Fase 8 sorgt für das zentrierte Einführen. Mit dem Beginn des Setzprozesses wird ein Druck auf die Blindnietmutter 1 erzeugt und die Fase 8 gleichmäßig in die Bohrung 61 gedrückt und dadurch zentriert sich die Blindnietmutter 1.

Es ist nicht erforderlich, dass das Werkstück 60 dicker ist als der Verformungsabschnitt 5 lang ist. Eine Sacklochbohrung muss aber mindestens die Länge der Blindnietmutter 1 aufweisen.

In Fig. 5E ist dargestellt, dass durch die Hubbewegung des Werkzeugs 40 und des mit dem Werkzeug 40 verbundenen Gewindeabschnitts 6 dieser nach Art eines Spreizelements teilweise in den dann als Dichtelement wirkenden Verformungsbereich 5 gezogen wird, nachdem das Material der Blindnietmutter 1 an der Sollbruchstelle 9 gebrochen ist. Dadurch kommt es zu einer beginnenden plastischen Verformung des Verformungsbereichs 5.

In Fig. 5F ist der Hubvorgang des Werkzeugs 40 und des Gewindeabschnitts 6 und damit auch der Verformungsvorgang beendet. Durch die Krafteinwirkung kommt der Gewindeabschnitt 6 mit einer Anschlagsfläche 70 an seiner Oberseite zur Anlage an das Mundstück 41 des Werkzeugs 40.

In Fig. 5G wird das Werkzeug 40 aus der Blindnietmutter 1 herausgeschraubt und die Bohrung 61 ist nun durch den plastisch und elastisch radial verformten Verformungsabschnitt 5 gegenüber dem Werkstück 60 dicht verschlossen. Der in den Verformungsabschnitt 5 eingetauchte Gewindeabschnitt 6 ist gegenüber diesem wegen der Kraftausübung zur radialen Verformung ebenfalls dicht und verschließt mit seinem geschlossenen Ende damit auch die Bohrung 61.

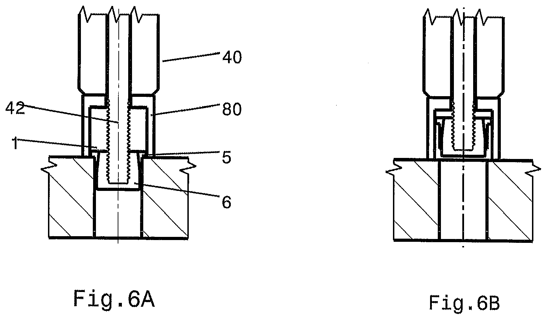

Für die Demontage kann dasselbe Montagewerkzeug 40 verwendet werden, wie in Fig. 5A-5F. In Fig. 6A wird dargestellt, dass das Mundstück 41 aus Fig. 5A durch eine Stützhülse 80 ausgetauscht wurde. Die Stützhülse 80 stützt sich auf dem Werkstück 60 ab und über den in den Gewindeabschnitt 6 der Blindnietmutter 1 eingedrehten Gewindedorn 42 wird die komplette Blindnietmutter 1 mit Verformungsabschnitt 5 und Gewindeabschnitt 6 durch einen erneuten Hub des Gewindedorns 42 aus der Bohrung 61 herausgezogen, wodurch diese wieder offen ist.

## Patentansprüche

1. Blindnietmutter (1) zum Einbringen in eine Öffnung (61) eines oder mehrerer Bauteile (60), aufweisend einen hohlen Schaft (2) mit einem vorderen Ende (3) zum Ansetzen eines Montagewerkzeugs (40) und mit einem hinteren Ende (4) zum Einbringen in und/oder Durchführen durch die Öffnung (61), wobei der Schaft (2) einen Verformungsabschnitt (5) mit einer ersten Wandstärke (t1) und einen daran anschließenden Gewindeabschnitt (6) mit einer zweiten Wandstärke (t2) größer als die erste Wandstärke (t1) aufweist, wobei der Gewindeabschnitt (6) mit einem Innengewinde (7) versehen ist, wobei der Schaft (2) im Bereich des Gewindeabschnitts (6) und/oder des Verformungsabschnitts (5) eine Sollbruchstelle (9) aufweist, die bezüglich ihrer Lage und ihrer Ausrichtung so ausgebildet ist, dass beim Spannen des Schafts (2) in axialer Richtung nach dem Bruch an der Sollbruchstelle (9) ein Eintauchen des Gewindeabschnitts (6) in den Verformungsabschnitt (5) erfolgt, **dadurch gekennzeichnet, dass** der Verformungsabschnitt (5) als Dichtkörper ausgebildet ist und radiale Rillen (10) aufweist.

2. Blindnietmutter (1) nach Anspruch 1, **dadurch gekennzeichnet, dass** der Gewindeabschnitt (6) einen an den Verformungsabschnitt (5) anschließenden Verbindungsbereich (20) der Länge (L4) mit der Sollbruchstelle (9) aufweist, wobei der Gewindeabschnitt (6) an seinem Außenumfang in Richtung zum Verbindungsbereich (20) hin über eine Länge (L3) konisch verjüngt ist bis zu einer dritten Wandstärke (t3) am Übergang zum Verbindungsbereich (20).

3. Blindnietmutter (1) nach Anspruch 1 oder 2, **dadurch gekennzeichnet, dass** die minimale Wandstärke (t4) der Sollbruchstelle (9) im Verbindungsbereich (20) kleiner als die erste Wandstärke (t1) des Verformungsabschnitts (5) und kleiner als die dritte Wandstärke (t3) am Übergang zum Verbindungsbereich (20) ist.

4. Blindnietmutter (1) nach einem der Ansprüche 1 bis 3, **dadurch gekennzeichnet, dass** der Konuswinkel (a) am Gewindeabschnitt (6) 5° bis 45° beträgt.

5. Blindnietmutter (1) nach einem der Ansprüche 1 bis 4, **dadurch gekennzeichnet, dass** am vorderen Ende (3) des Schafts (2) ein Kopf mit einer Kopfauflage als Senkkopf oder als Flachkopf ausgebildet ist.

6. Blindnietmutter (1) nach einem der Ansprüche 1 bis 5, **dadurch gekennzeichnet, dass** an dem vorderen Ende (3) des Schafts (2) eine sich nach außen verbreiternde Fase (8) zum Zentrieren in einer Öffnung (61) angebracht ist.

7. Blindnietmutter (1) nach einem der Ansprüche 1 bis 6, **dadurch gekennzeichnet, dass** der Gewindeabschnitt (6) geschlossen ist und ein Sacklockgewinde aufweist.

8. Verwendung der Blindnietmutter (1) nach einem der vorhergehenden Ansprüche 1 bis 7, **dadurch gekennzeichnet, dass** die Blindnietmutter als Verschlusselement verwendet wird.

9. Verwendung der Blindnietmutter (1) nach einem der vorhergehenden Ansprüche 1 bis 7, **dadurch gekennzeichnet, dass** die Blindnietmutter als Dübel, insbesondere mit einem metrischen Gewinde, verwendet wird.

10. Verwendung der Blindnietmutter (1) nach einem der vorhergehenden Ansprüche 8 oder 9, **dadurch gekennzeichnet, dass** die Mantelfläche des Verformungsabschnitts (5) des Schafts (2) geometrische Gestaltungselemente aufweist, die die Drehmomentaufnahme erhöhen.

## Claims

1. A blind rivet nut (1) for introducing into an opening (61) of one or multiple components (60), said blind rivet nut comprising a hollow shank (2) having a front end (3) for attaching an installation tool (40) and having a rear end (4) for introducing into and/or passing through the opening (61), wherein the shank (2) comprises a deformation portion (5) having a first wall thickness (t1) and, adjoining thereto, a threaded portion (6) having a second wall thickness (t2) that is greater than the first wall thickness (t1), wherein the threaded portion (6) is provided with an internal screw thread (7), wherein the shank (2) comprises a predetermined breaking point (9) in the region of the threaded portion (6) and/or the deformation portion (5), said predetermined breaking point being designed with regard to its position and its orientation such that the threaded portion (6) penetrates into the deformation portion (5) as the shank (2) is being tensioned in the axial direction after breaking at the predetermined breaking point (9), **characterized in that** the deformation portion (5) is realized in the form of a sealing member and comprises radial grooves (10).

2. The blind rivet nut (1) according to Claim 1, **characterized in that** the threaded portion (6) comprises a connecting region (20) of the length (L4) that adjoins the deformation portion (5) and comprises the predetermined breaking point (9), wherein the threaded portion (6), on its outer circumference, is conically tapered over a length (L3) in a direction toward the connecting region (20) to a third wall thickness (t3) at the transition to the connection region (20).

3. The blind rivet nut (1) according to Claim 1 or 2, **characterized in that** that minimum wall thickness (t4) of the predetermined breaking point (9) in the connecting region (20) is smaller than the first wall thickness (t1) of the deformation portion (5) and smaller than the third wall thickness (t3) at the transition to the connecting region (20).

4. The blind rivet nut (1) according to any one of Claims 1 to 3, **characterized in that** the cone angle (a) on the threaded portion (6) is 5° to 45°.

5. The blind rivet nut (1) according to any one of Claims 1 to 4, **characterized in that** a head with a head contact area is realized in the form of a countersunk head or a flat head on the front end (3) of the shank (2).

6. The blind rivet nut (1) according to any one of Claims 1 to 5, **characterized in that** an outwardly widening bevel (8) is arranged on the front end (3) of the shank (2) in order to centre the blind rivet in an opening (61).

7. The blind rivet nut (1) according to any one of Claims 1 to 6, **characterized in that** the threaded portion (6) is closed and comprises a blind bore screw thread.

8. Use of the blind rivet nut (1) according to any one of the preceding Claims 1 to 7, **characterized in that** the blind rivet nut is used as a closure element.

9. Use of the blind rivet nut (1) according to any one of the preceding Claims 1 to 7, **characterized in that** the blind rivet nut is used as a screw anchor, in particular having a metric thread.

10. Use of the blind rivet nut (1) according to any one of the preceding Claims 8 or 9, **characterized in that** the peripheral surface of the deformation portion (5) of the shank (2) comprises geometric design elements that increase torque absorption.

## Revendications

1. Écrou à sertir en aveugle (1) destiné à être introduit dans un orifice (61) d'un ou de plusieurs éléments de construction (60), présentant un fût creux (2) avec une extrémité avant (3) pour la mise en place d'un outil de montage (40) et avec une extrémité arrière (4) destinée à être introduite dans l'orifice (61) et/ou à le traverser, dans lequel le fût (2) présente une section de déformation (5) avec une première épaisseur de paroi (t1) ainsi qu'une section filetée (6) reliée à celle-ci et avec une seconde épaisseur de paroi (t2) plus grande que la première épaisseur de paroi (t1), la section filetée (6) étant munie d'un filetage intérieur (7), le fût (2) présentant dans la zone de la section filetée (6) et/ou de la section de déformation (5) un point de rupture théorique (9) qui est réalisé, concernant sa position et son orientation, de telle sorte que, lors du serrage du fût (2) dans la direction axiale, il se produit après la rupture au niveau du point de rupture théorique (9) une pénétration de la section filetée (6) dans la section de déformation (5), **caractérisé en ce que** la section de déformation (5) est réalisée sous la forme d'un corps d'étanchéité et présente des encoches radiales (10).

2. Écrou à sertir en aveugle (1) selon la revendication 1, **caractérisé en ce que** la section filetée (6) présente une zone de liaison (20) de longueur (L4) avec le point de rupture théorique (9) et qui est reliée à la section de déformation (5), la section filetée (6) se rétrécissant, au niveau de sa circonférence extérieure dans la direction de la zone de liaison (20), de manière conique sur une longueur (L3) jusqu'à une troisième épaisseur de paroi (t3) à la jonction avec la zone de liaison (20).

3. Écrou à sertir en aveugle (1) selon la revendication 1 ou 2, **caractérisé en ce que** l'épaisseur de paroi minimale (t4) du point de rupture théorique (9) dans la zone de liaison (20) est plus petite que la première épaisseur de paroi (t1) de la section de déformation (5) et plus petite que la troisième épaisseur de paroi (t3) à la jonction avec la zone de liaison (20).

4. Écrou à sertir en aveugle (1) selon l'une des revendications 1 à 3, **caractérisé en ce que** l'angle du cône (a) au niveau de la section filetée (6) est compris de 5° à 45°.

5. Écrou à sertir en aveugle (1) selon l'une des revendications 1 à 4, **caractérisé en ce que**, au niveau de l'extrémité avant (3) du fût (2), une tête est réalisée avec un support de tête sous forme d'une tête fraisée ou sous la forme d'une tête plate.

6. Écrou à sertir en aveugle (1) selon l'une des revendications 1 à 5, **caractérisé en ce que**, au niveau de l'extrémité avant (3) du fût (2), un chanfrein (8) élargi vers l'extérieur est appliqué pour le centrage dans un orifice (61).

7. Écrou à sertir en aveugle (1) selon l'une des revendications 1 à 6, **caractérisé en ce que** la section filetée (6) est fermée et présente un filetage à trou borgne.

8. Utilisation de l'écrou à sertir en aveugle (1) selon l'une quelconque des revendications précédentes 1 à 7, **caractérisée en ce que** l'écrou à sertir en aveugle est utilisé en tant qu'élément de fermeture.

9. Utilisation de l'écrou à sertir en aveugle (1) selon l'une quelconque des revendications précédentes 1 à 7, **caractérisée en ce que** l'écrou à sertir en aveugle est utilisé en tant que goujon, en particulier avec un filetage métrique.

10. Utilisation de l'écrou à sertir en aveugle (1) selon l'une quelconque des revendications précédentes 8 ou 9, **caractérisée en ce que** la surface de revêtement de la section de déformation (5) du fût (2) présente des éléments de conformation géométrique qui augmentent la réception du couple de serrage.
